# EUROPÄISCHE PATENTSCHRIFT

(11) **EP 3 666 501 B1**
(45) Veröffentlichungstag und Bekanntmachung des Hinweises auf die Patenterteilung: **22.06.2022**
(21) Anmeldenummer: 19215668.5
(22) Anmeldetag: 12.12.2019
(51) Int. Cl.: B29C 64/118, B29C 70/38, B33Y 10/00, B33Y 30/00, C08J 5/24, C08J 5/04, B29K 101/12

(54) **VERFAHREN UND VORRICHTUNG ZUM IMPRÄGNIEREN VON FASERMATERIAL**
METHOD AND DEVICE FOR IMPREGNATING FIBROUS MATERIAL
PROCÉDÉ ET DISPOSITIF D'IMPRÉGNATION D'UNE MATIÈRE FIBREUSE

(30) Priorität: 13.12.2018 DE 102018132030
(43) Veröffentlichungstag der Anmeldung: 17.06.2020
(73) Patentinhaber: Deutsches Zentrum für Luft- und Raumfahrt e.V., 51147 Köln (DE)
(72) Erfinder: GROHMANN, Yannis, 20249 Hamburg (DE)
(74) Vertreter: Gramm, Lins & Partner Patent- und Rechtsanwälte PartGmbB

(56) Entgegenhaltungen:
- DE-A1-102011 102 950
- DE-A1-102016 110 323
- US-A1- 2017 210 074

## Beschreibung

Die Erfindung betrifft ein Verfahren zum Imprägnieren von bandförmigen Fasermaterialien mit einem Kunststoffmaterial. Die Erfindung betrifft ebenso eine Vorrichtung zum Imprägnieren von bandförmigen Fasermaterialien mit einem Kunststoffmaterial.

Ebenso vom Erfindungsgedanken umfasst ist ein Verfahren zum Ablegen von bandförmigen Fasermaterialien, die mit einem Kunststoffmaterial imprägniert wurden, sowie ein Verfahren zum Extrudieren eines Kunststoffmaterials mittels einer 3D-Druckanlage, wobei das Kunststoffmaterial ein Fasermaterial imprägniert. Ebenso betrifft die Erfindung eine Vorrichtung hierzu.

Fasermaterialien, die auf einem Werkzeug abgelegt und aus denen ein Faserverbundbauteil hergestellt werden soll, sowie Fasermaterialien, die beim Extrudieren von Kunststoff in einem 3D-Druckverfahren Verwendung finden, werden in der Regel vor dem Ablegen bzw. Extrudieren mit einem meist thermoplastischen Kunststoffmaterial imprägniert, so dass die Materialmischung aus Fasermaterial und Kunststoffmaterial ausgegeben werden kann. Hierbei wird das Kunststoffmaterial in der Regel auf seine entsprechende Schmelztemperatur erwärmt, so dass es seinen Zustand von dem festen in den aufgeschmolzenen bzw. flüssigen Zustand wechselt und so das bereitgestellte Fasermaterial benetzen und imprägnieren kann.

Bei der Ablage von Fasermaterial zur Herstellung eines Faserverbundbauteils werden in der Regel vorimprägnierte Fasermaterialien verwendet, bei denen das Fasermaterial bereits mit dem Kunststoffmaterial imprägniert ist (sogenannte Prepregs). Allerdings weisen herkömmliche Prepregs in der Regel nur eine begrenzte Haltbarkeit auf und müssen darüber hinaus bei der Lagerung und bei der automatisierten Faserablage gekühlt werden, um Beschädigungen des Fasermaterials sowie der Anlage zu vermeiden. Gleichzeitig sollte das Fasermaterial kurz vor der Ablage erwärmt werden, um ein bestmögliches Ergebnis zu erzielen.

Bei den generativen Verfahren (3D-Druck) wird einem 3D-Druckkopf ein Kunststoffmaterial zugeführt, was in der Regel erwärmt und dann in aufgeschmolzener bzw. flüssiger Form extrudiert wird. Hierdurch lassen sich fast beliebige Formen herstellen. Dabei wird meist schichtweise ein schmelzbarer, meist thermoplastischer Kunststoff, gedruckt, wodurch sich am Ende des Verfahrens ein dreidimensionales Bauteil bzw. eine dreidimensionale Struktur ergibt.

Aus Hauke Prüß, Thomas Vietor: "Neue Gestaltungsfreiheiten durch 3D-gedruckte Faser-Kunststoff-Verbunde", Forum für Rapid Technology, Ausgabe 12 (2015), ist ein 3D-Druckkopf bekannt, dem ein quasiendloses Fasermaterial zugeführt wird. Des Weiteren wird dem 3D-Druckkopf mithilfe zweier Zuführkanäle ein Kunststoffmaterial zugeführt, wobei das Fasermaterial und das Kunststoffmaterial, welches durch eine Heizeinrichtung erwärmt und aufgeschmolzen wird, in einer gemeinsamen Mischkammer münden, wodurch das hindurchführende Fasermaterial von dem Kunststoffmaterial benetzt und in dieser Form ausgegeben wird. Hierdurch lassen sich nahezu beliebige Strukturen mit integrierten Lastpfaden entwickeln, wobei hier auch in die Höhe extrudiert werden kann.

Aus der DE 10 2015 223 540 A1 ist ein 3D-Drucker zum Drucken von flüssigem Metall offenbart, wobei hier das Erwärmen des Metalls mithilfe einer Induktionsspule erfolgt. Aus DE 10 2011 102 950 ist ein Verfahren zum Ablegen von Faseranordnungen zur Herstellung von Textilvorformlingen bekannt, die zumindest teilweise aus Carbonfasern bestehen.

Bei der Ablage von Fasermaterial, wie beim faserverstärkten 3D-Druck, wäre es wünschenswert, dem Faserlegekopf ein trockenes Fasermaterial zuzuführen, wobei die Imprägnierung dann innerhalb des Faserlegekopfes erfolgt. Hierzu müsste dem Faserlegekopf ein Kunststoffmaterial zugeführt werden, das dann innerhalb des Faserlegekopfes erwärmt wird, um so das Fasermaterial zu benetzen.

Die Imprägnierung erfolgt in der Regel in einer Umgebung (z.B. einem Konfektionsofen), die der Schmelztemperatur des Kunststoffmaterials entspricht. Aufgrund großer aufzuwärmender Massen hat man hier hohen Stromverbrauch und einen sehr trägen Aufheiz- oder Abkühlprozess, wenn der Prozess nicht endlos kontinuierlich läuft. Für die Ablage von Fasermaterial oder dem Extrudieren von faserverstärkten Kunststoffen im 3D-Druck wäre dies ungeeignet.

Die US 2017/0210074 A1 offenbart eine Faserlegeanlage zum Ablegen von Fasermaterial auf einem Werkzeug, wobei der Faserlegeanlage ein Fasermaterial und ein weiteres, zweites Material, welches ebenfalls Fasern enthält, zugeführt werden. Innerhalb einer Mischkammer werden diese beiden Materialien miteinander zusammengeführt und anschließend ausgegeben.

Es ist daher Aufgabe der vorliegenden Erfindung ein verbessertes Verfahren sowie eine entsprechend verbesserte Vorrichtung anzugeben, mit dem Fasermaterial insbesondere während der Ablage bzw. während des 3D-Druckes mit einem Kunststoffmaterial prozesssicher imprägniert werden kann.

Die Aufgabe wird mit dem Verfahren zum Imprägnieren von bandförmigen Fasermaterialien gemäß Anspruch 1 erfindungsgemäß gelöst.

Unter dem Imprägnieren im Sinne der vorliegenden Erfindung wird das zumindest teilweise Benetzen bzw. Kontaktieren des Fasermaterials mit dem Kunststoffmaterial verstanden. Das Fasermaterial muss dabei nicht zwangsläufig mit dem Kunststoffmaterial vollständig getränkt und von dem Kunststoffmaterial umschlossen sein. Vielmehr wird unter dem Begriff Imprägnieren auch ein zumindest einseitiges Benetzen des Fasermaterials mit dem Kunststoffmaterial verstanden.

Erfindungsgemäß wird vorgeschlagen, dass das elektrisch leitfähige, bandförmige Fasermaterial durch Kontaktierung wenigstens zweier Elektroden und Anlegen einer elektrischen Spannung bestromt wird, wobei durch den erzeugten Stromfluss das elektrisch leitfähige Fasermaterial in den Bestromungsabschnitt in Art einer elektrischen Widerstandsheizung erwärmt wird. Dabei wird das elektrisch leitfähige Fasermaterial durch das Bestromen derart erwärmt, dass ein Kunststoffmaterial, was der Imprägniervorrichtung zugeführt wird und das insbesondere in einem noch nicht aufgeschmolzenen, meist festen Zustand vorliegt, durch den Kontakt mit dem elektrisch leitfähigen Fasermaterial im Bestromungsabschnitt so erwärmt wird, dass es seine Schmelztemperatur erreicht oder auf seiner Schmelztemperatur gehalten wird.

Das elektrisch leitfähige, bandförmige Fasermaterial wird dabei insbesondere während des Imprägnierens durch die Imprägniervorrichtung kontinuierlich hindurchbewegt, so dass sich der Bestromungsabschnitt auf dem Fasermaterial proportional zu der Bewegung des Fasermaterials kontinuierlich verändert. Es wurde dabei erkannt, dass trotz des kontinuierlichen Bewegens des Fasermaterials durch die Imprägniervorrichtung das elektrisch leitfähige Fasermaterial so bestromt werden kann, dass hierdurch das Fasermaterial eine Temperatur erreicht, die geeignet ist, ein aufschmelzbares Kunststoffmaterial allein durch den Kontakt mit dem elektrisch leitfähigen Fasermaterial im Bestromungsabschnitt zu erwärmen und aufzuschmelzen und hierdurch das Fasermaterial zu imprägnieren. Des Weiteren wurde erkannt, dass sich auf diese Weise ein Fasermaterial mit dem Kunststoffmaterial imprägnieren lässt, welches zuvor im festen Zustand bzw. im nicht aufgeschmolzenen Zustand und im unimprägnierten Zustand vorlag.

Mit der vorliegenden Erfindung wird es somit möglich, ein Fasermaterial kontinuierlich mit einem Kunststoffmaterial zu imprägnieren, ohne dass hierfür die Imprägniervorrichtung insgesamt aufgeheizt werden muss, beispielsweise in einem Konvektionsofen. Vielmehr kann nunmehr gezielt derjenige Bereich aufgeheizt werden, in dem das Fasermaterial mit dem Kunststoffmaterial imprägniert werden soll. Aufwendige Aufheiz- und Abkühlungszyklen werden somit nicht mehr notwendig. Dies spart Zeit und Kosten.

Als elektrisch leitfähige, bandförmige Fasermaterialien kommen insbesondere Kohlenstofffasermaterialien in Betracht, bei denen die Verstärkungsfasern elektrisch leitfähig sind. Die Verstärkungsfasern liegen dabei insbesondere in Längsrichtung des bandförmigen Fasermaterials vor. Als elektrisch leitfähige, bandförmige Fasermaterialien kommen dabei insbesondere Tows, Rovings sowie Tapes in Betracht, die im Wesentlichen quasiendlos sind. Diese quasiendlosen bandförmigen Fasermaterialien weisen dabei eine, ein Vielfaches höhere längliche Ausdehnung im Verhältnis zur Breite auf. Meist werden derartige quasiendlose bandförmige Fasermaterialien auf Rollen aufgewickelt und dann am entsprechenden Einsatzort von der Spule abgewickelt.

In einer Ausführungsform ist vorgesehen, dass der Imprägniervorrichtung eine Mehrzahl von elektrisch leitfähigen, bandförmigen Fasermaterialien zugeführt wird, wobei jedes elektrisch leitfähige Fasermaterialband dann mit je mindestens zwei Elektroden elektrisch kontaktiert wird. Über eine Steuereinheit kann dann jedes Fasermaterialband individuell bestromt werden. Hierdurch kann insbesondere die Temperatur jedes einzelnen Fasermaterialbandes individuell an die vorherrschenden Bedingungen angeknüpft werden, wenn beispielsweise mithilfe eines Temperatursensors die Temperatur jedes einzelnen Fasermaterialbandes überwacht wird.

Gemäß einer Ausführungsform kann der Imprägniervorrichtung das Kunststoffmaterial in Form eines Kunststoffpulvers, eines Kunststoffgranulates, eines Kunststoffvlieses, eines Kunststofffestkörpers, einer Kunststofffolie oder in Form von Kunststofffasern zugeführt werden und mit dem wenigstens einen zugeführten, elektrisch leitfähigen bandförmigen Fasermaterial in Kontakt gebracht werden.

Das Kunststoffmaterial kann dabei in fester Form, d.h. im nicht aufgeschmolzenen Zustand, zugeführt werden, wobei die Temperatur des Kunststoffmaterials dann meist weit unter der Verarbeitungs- bzw. Prozesstemperatur des Kunststoffmaterials liegt.

Denkbar ist aber auch, dass das Kunststoffmaterial im bereits aufgeschmolzenen Zustand (Kunststoffschmelze) zugeführt wird und somit weitestgehend im Bereich seiner Verarbeitungs- bzw. Prozesstemperatur liegt. Die Kunststoffschmelze kann bspw. durch Extrusion, Sprühen und/oder Schleudern auf das Fasermaterial aufgetragen werden. Durch die Temperierung des Fasermaterials wird dann die Kunststoffschmelze auf der Verarbeitungstemperatur und in aufgeschmolzenen Zustand gehalten, damit diese tiefer in das Fasermaterial eindringen kann.

Das Kunststoffpulver oder das Kunststoffgranulat, welches in fester Form zugeführt wird, wird dann mit dem bandförmigen Fasermaterial vor oder in dem Bestromungsabschnitt in Kontakt gebracht, wobei innerhalb des Bestromungsabschnittes dann das Fasermaterial erwärmt wird und diese Wärme auch an das mit dem Fasermaterial in Kontakt gebrachten Kunststoffpulver oder Kunststoffgranulat übertragen wird, so dass dieses aufschmilzt und das Fasermaterial imprägniert.

Gemäß einer Ausführungsform wird das mit dem aufgeschmolzenen Kunststoffmaterial kontaktierte Fasermaterial einem Walzwerk der Imprägniervorrichtung zugeführt, , wobei mittels des Walzwerkes (19) zumindest teilweise ein Druck auf das mit dem Kunststoffmaterial kontaktierte bandförmige Fasermaterial aufgebracht wird. So ist es denkbar, dass mittels des Walzwerkes auf wenigstens eine flächige Wandseite des bandförmigen Fasermaterials, vorzugweise auf beide flächigen Bandseiten, ein Druck aufgebracht wird.

Ein Walzwerk im Sinne der vorliegenden Erfindung kann bspw. ein oder zwei drehende Walzen bzw. ein Walzpaar sein. Denkbar ist aber auch, dass das Walzwerk eine Extruderdüse, eine Ringdüse, eine Düse, eine Lochöffnung ist, durch die das mit dem aufgeschmolzenen Kunststoffmaterial kontaktierte Fasermaterial hindurch geführt wird.

Mithilfe des Walzwerkes der Imprägniervorrichtung kann das im Bestromungsabschnitt aufgeschmolzene Kunststoffmaterial tief in das Fasermaterial hineingedrückt werden, um so ein prozesssicheres und gutes Imprägnierergebnis zu erzielen. Dies ist meist besonders dann vorteilhaft, wenn das Kunststoffmaterial im aufgeschmolzenen Zustand eine hohe Zähflüssigkeit bzw. eine hohe Viskosität aufweist.

Dabei kann ein Walzwerk vorgesehen sein, das wenigstens zwei gegensinnig rotierende Walzkörper bzw. Rollen hat, zwischen denen das Fasermaterial mit dem aufgeschmolzenen Kunststoffmaterial hindurchgeführt wird. Durch eine vorgegebene Spaltbreite zwischen den Walzkörpern kann dabei der auf das Fasermaterial und das aufgeschmolzene Kunststoffmaterial wirkende Druck vorgegeben werden. Das an der Oberfläche des Fasermaterials befindliche aufgeschmolzene Kunststoffmaterial wird dann durch die Walzkörper auf dem Fasermaterial verteilt und in das Fasermaterial hineingedrückt. Denkbar ist aber auch, dass nur ein Walzkörper vorgesehen ist, wobei das Fasermaterial zwischen dem Walzkörper und einer vorgegebenen Anpressplatte hindurchgeführt wird. Das Fasermaterial gleitet dabei über die Anpressplatte, während durch den Walzkörper ein Druck auf das Fasermaterial ausgeübt wird.

Gemäß einer Ausführungsform wird das Walzwerk temperiert. Hierdurch kann erreicht werden, dass das aufgeschmolzene Kunststoffmaterial nicht an einem der Walzkörper abkühlt, aushärtet und dann an diesem festklebt. Verunreinigungen und darauf basierende Standzeiten der Imprägniervorrichtung können so vermieden werden.

Gemäß einer Ausführungsform wird durch das Walzwerk wenigstens eine der Elektroden gebildet. So ist es denkbar, dass der Walzkörper an seiner Umfangsfläche ein elektrisch leitfähiges Material hat, das in Art einer Elektrode das Fasermaterial kontaktiert, wobei das elektrisch leitfähige Umfangsmaterial des Walzkörpers dann mit einer Spannungsfalle so verbunden wird, dass ein Stromfluss in dem Bestromungsabschnitt basierend auf einer ersten Elektrode und dem Walzkörper bzw. dem Walzwerk als zweite Elektrode erzeugt wird.

Gemäß einer Ausführungsform wird das der Imprägniervorrichtung zugeführte Fasermaterial vor dem Imprägnieren mit dem Kunststoffmaterial aufgespreizt, um so das Imprägnierergebnis zu verbessern. Hierdurch wird eine Oberflächenvergrößerung bewirkt, wodurch eine bessere Durchdringung des Kunststoffmaterials erreicht werden kann.

Gemäß einer weiteren Ausführungsform hierzu ist es denkbar, dass das aufgespreizte und imprägnierte Fasermaterial anschließend durch eine Extruderdüse geführt wird, die das Fasermaterial wieder zusammenführt und das Kunststoffmaterial tief in das Fasermaterial drückt. Durch das Spaltmaß und/oder die Geometrie der Düsenöffnung kann die Geometrie der Filamente am Auslass bestimmt und/oder das Verhältnis von Fasermaterial zu Kunststoffmaterial eingestellt wirden.

Erfindungsgemäß wird das flächige Fasermaterial einer Vibrationseinrichtung der Imprägniervorrichtung zugeführt, wobei mittels der Vibrationseinrichtung eine Bewegung oder Vibration des bandförmigen Fasermaterials erzeugt wird.

Es hat sich gezeigt, dass Bewegungen bzw. Vibrationen, die in dem bandförmigen Fasermaterial erzeugt werden, den Prozess des Imprägnierens des Fasermaterials mit dem aufgeschmolzenen Kunststoffmaterial unterstützen, indem aufgrund der Bewegung bzw. Vibration das aufgeschmolzene Kunststoffmaterial tiefer und vor allem prozesssicher in das Fasermaterial infundiert.

In Verbindung mit dem Walzwerk und einem oder mehreren Walzkörpern ist es dabei denkbar, dass die Vibrationseinrichtung in dem Walzwerk integriert ist, um so nicht nur einen Druck auf das Fasermaterial auszuüben, sondern auch gleichzeitig eine Vibration bzw. eine Bewegung des Fasermaterials zu erzeugen. Denkbar ist es aber auch, dass die Vibrationseinrichtung an oder in den Elektroden vorgesehen ist, um die Bewegung bzw. Vibration des Fasermaterials zu bewirken. Dabei ist es denkbar, dass auch mehr als eine Vibrationseinrichtung vorgesehen ist, um an verschiedenen Stellen des Fasermaterials in der Imprägniervorrichtung eine Vibration bzw. eine Bewegung zu erzeugen.

Denkbar ist auch, dass die Vibrationseinrichtung Teil einer Extruderdüse ist, die oftmals insbesondere beim 3D-Druck Anwendung findet. Die Vibrationseinrichtung kann auch durch eine Ringdüse, Düse oder Lochöffnung gebildet werden.

Des Weiteren kann die Vibration auch zu einer zusätzlichen Erwärmung genutzt werden. Hierfür wird mit Hilfe der Vibrationseinrichtung eine Vibration, vorzugsweise im Ultraschallbereich, derart erzeugt, dass das Fasermaterial und/oder das Kunststoffmaterial einen zusätzlichen Wärmeeintrag erhält, bspw. als Vorwärmung.

Gemäß einer weiteren Ausführungsform wird mittels einer Temperaturmesseinrichtung der Imprägniervorrichtung die Temperatur des wenigstens einen bandförmigen Fasermaterials, vorzugsweise innerhalb des Bestromungsabschnittes, ermittelt.

Die durch die Temperaturmesseinrichtung ermittelte Temperatur kann dabei insbesondere kontinuierlich ermittelt werden und ggf. in einem Datenspeicher für eine spätere Bauteildokumentation hinterlegt werden. Denkbar ist aber auch, wie später noch gezeigt wird, dass in Abhängigkeit der ermittelten Temperatur aktiv in den Imprägnierprozess eingegriffen wird.

Die Temperaturmesseinrichtung kann dabei beispielsweise eine Thermografiekamera aufweisen, die den zu untersuchenden Abschnitt aufzeichnet, wobei dann mithilfe einer Auswerteeinheit anhand der in den aufgenommenen Bildern kodierten Temperaturen dann die Temperatur des bandförmigen Fasermaterials ermittelt wird. Eine Thermografiekamera hat dabei den Vorteil, dass sie auch mehr als ein bandförmiges Fasermaterial erfassen kann, wodurch durch einen einzigen Sensor die Temperatur von mehreren bandförmigen Fasermaterialien gleichzeitig erfassbar ist.

Gemäß einer weiteren Ausführungsform werden elektrische Eigenschaften des Fasermaterials mittels einer Auswerteinheit ermittelt, bspw. der elektrische Widerstand. Dies kann während der Bestromung des Fasermaterials erfolgen, wodurch sich Rückschlüsse auf die Materialqualität, Prozessfehler und/oder andere Prozessparameter, wie bspw. die Temperatur, ziehen lassen.

Gemäß einer Ausführungsform hierzu ist es vorteilhaft, wenn mittels einer Steuereinrichtung der Imprägniervorrichtung das Anlegen der elektrischen Spannung in Abhängigkeit von der ermittelten Temperatur gesteuert wird.

Hierdurch wird es möglich, einen Regelkreis zu bilden, der in Abhängigkeit der ermittelten Temperatur die elektrische Spannung so steuert, dass die Temperatur des bandförmigen Fasermaterials insbesondere im Bestromungsabschnitt an eine vorgegebene Soll-Temperatur angeglichen wird. So kann mithilfe der Steuereinrichtung ein Vergleich der durch die Temperaturmesseinrichtung ermittelten Ist-Temperatur des bandförmigen Fasermaterials mit einer vorgegebenen Soll-Temperatur erfolgen, wobei dann in Abhängigkeit des Vergleiches die elektrische Spannung an den Elektroden erhöht oder verringert wird. Die vorgegebene Soll-Temperatur sollte dabei der Schmelztemperatur bzw. Verarbeitungstemperatur des zugeführten Kunststoffes entsprechen oder ggf. leicht oberhalb der Schmelztemperatur liegen.

Dabei kann mithilfe der Steuereinrichtung der Stromfluss innerhalb des Bestromungsabschnittes auch derart gesteuert und geregelt werden, dass das Anlegen der elektrischen Spannung periodisch gepulst wird, wobei die Frequenz in Abhängigkeit von der Temperatur eingestellt wird. Je höher die Frequenz, desto mehr Stromflusspulse werden innerhalb des Bestromungsabschnittes pro Zeit erzeugt. Hierdurch kann der quantitative Energieeintrag innerhalb des Bestromungsabschnittes über die Zeit eingestellt werden und somit die Temperatur an die Soll-Temperatur angepasst werden.

Denkbar ist aber auch, dass ein oder mehrere Elektroden beim Überschreiten der Soll-Temperatur abgeschaltet werden, bis innerhalb des Bestromungsabschnittes die ermittelte Ist-Temperatur unterhalb der Soll-Temperatur fällt.

Selbstverständlich sind auch andere Temperaturmesseinrichtungen denkbar, die beispielsweise eine Temperatur mittels Pyrometer ermitteln.

Gemäß einer Ausführungsform ist das zugeführte Kunststoffmaterial ein thermoplastischer Kunststoff oder weist einen solchen thermoplastischen Kunststoff auf oder besteht aus einem solchen.

Die Aufgabe wird im Übrigen auch mit dem Verfahren zum Ablegen von bandförmigen Fasermaterialien auf einem Formwerkzeug mittels einer Faserlegeanlage gemäß Anspruch 10 gelöst, wobei das bandförmige Fasermaterial elektrisch leitfähig ist und gemäß den vorherstehend beschriebenen Imprägnierverfahren während des kontinuierlichen Ablegens mit einem Kunststoffmaterial imprägniert wird.

Eine solche Faserlegeanlage weist dabei in der Regel einen Bewegungsautomaten auf, an dem als Endeffektor ein Faserlegekopf angeordnet ist, dem kontinuierlich ein bandförmiges Fasermaterial zugeführt wird. Ein solches bandförmiges Fasermaterial kann dabei ein Tow, Roving oder ein Tape sein. In der Praxis werden einem solchen Faserlegekopf einer Faserlegeanlage auch mehr als ein bandförmiges Fasermaterial zugeführt.

Dabei ist es vorteilhaft, wenn das Imprägnieren des Fasermaterials innerhalb des Faserlegekopfes erfolgt und somit die Imprägniervorrichtung innerhalb des Faserlegekopfes angeordnet ist. Dies hat den Vorteil, dass trockenes Fasermaterial von einem feststehenden Fasermagazin hin zu den im Raum frei bewegbaren Faserlegekopf transportiert werden muss, ohne das Verschmutzungen aufgrund von verwendeten Prepregmaterialien oder andere Nachteile des Prepreg-Ablegeprozesses in Kauf genommen werden müssten. Innerhalb des Faserlegekopfes wird dann kontinuierlich während des Ablegens des Fasermaterials dieses mit dem Faserlegekopf ebenfalls zugeführten Kunststoffmaterial gemäß dem vorstehend genannten Verfahren imprägniert. Hierdurch kann Zeit und Geld eingespart werden.

Die Imprägniervorrichtung kann aber auch außerhalb des Faserlegekopfes vorgesehen sein, wodurch weniger bewegte Masse am Kopf existiert, die Komplexität der Kopfkonstruktion verringert wird und weniger Hitzeentwicklung am oder im Kopf insgesamt entsteht.

Die Aufgabe wird im Übrigen auch mit dem Verfahren zum Extrudieren eines Kunststoffmaterials mittels einer 3D-Druckanlage gemäß Anspruch 11 erfindungsgemäß gelöst, wobei der 3D-Druckanlage ein elektrisch leitfähiges, bandförmiges Fasermaterial bereitgestellt wird, das gemäß dem vorstehend beschriebenen Imprägnierverfahren während des Extrudierens mit dem Kunststoffmaterial imprägniert wird, wobei das Kunststoffmaterial zusammen mit dem Fasermaterial extrudiert wird.

Die 3D-Druckanlage weist in der Regel einen 3D-Druckkopf auf, dem normalerweise ein aufschmelzbares Kunststoffmaterial zugeführt wird. Sollen faserverstärkte Kunststoffe gedruckt werden, um so eine faserverstärkte Struktur im 3D-Druck herstellen zu können, kann dem 3D-Druckkopf auch ein Fasermaterial zugeführt werden, das dann zusammen in einer Mischkammer mit dem aufgeschmolzenen Kunststoffmaterial imprägniert wird.

Um nun den thermischen Energieeintrag so gering wie möglich zu halten, wird mit Hilfe des vorstehend beschriebenen Imprägnierverfahrens das elektrisch leitfähige und dem 3D-Druckkopf zugeführte Fasermaterial bestromt, wobei es sich derart erwärmt, dass das dem 3D-Druckkopf zugeführte Kunststoffmaterial mit dem bestromten Fasermaterial in Kontakt kommt und aufschmilzt und so derart imprägniert wird, dass es zum Zwecke der Herstellung der dreidimensionalen Struktur extrudiert werden kann.

Hierneben ist es auch denkbar, wenn die Imprägniervorrichtung außerhalb des 3D-Druckkopfes angeordnet ist, um die Konstruktion des 3D-Druckkopfes nicht unnötig zu verkomplizieren.

Die Erfindung umfasst ebenfalls eine Imprägniervorrichtung zum Imprägnieren von bandförmigen Fasermaterial mit einem Kunststoffmaterial gemäß Anspruch 12, wobei die Imprägniervorrichtung zur Durchführung des vorstehend beschriebenen Imprägnierverfahrens ausgebildet ist. Die Erfindung umfasst ebenfalls eine Faserlegeanlage zum Ablegen von bandförmigen Fasermaterial auf einem Formwerkzeug gemäß Anspruch 13, wobei die Faserlegeanlage eine Imprägniervorrichtung wie vorstehen genannt, aufweist. Die Faserlegeanlage hat dabei vorteilhafterweise einen Faserlegekopf, dem sowohl das bandförmige Fasermaterial als auch das Kunststoffmaterial zugeführt werden kann, wobei die Imprägniervorrichtung in oder an dem Faserlegekopf vorgesehen ist. Von der Erfindung ebenfalls umfasst ist eine 3D-Druckanlage zum Extrudieren eines Kunststoffmaterials, wobei die 3D-Druckanlage zum Extrudieren eine Materialmischung aus Kunststoffmaterial und bandförmigen Fasermaterial eingerichtet ist, und eine Imprägniervorrichtung wie vorstehend genannt, aufweist. Diese 3D-Druckanlage kann einen 3D-Druckkopf haben, dem sowohl das bandförmige Fasermaterial als auch das Kunststoffmaterial zugeführt werden, wobei die Imprägniervorrichtung in oder an dem 3D-Druckkopf vorgesehen ist.

Die Erfindung wird anhand der beigefügten Figuren beispielhaft erläutert. Es zeigen:
- Figur 1 -: schematische Darstellung einer ersten Ausführungsform;
- Figur 2 -: schematische Darstellung einer zweiten Ausführungsform;
- Figur 3 -: schematische Darstellung einer dritten Ausführungsform;
- Figur 4 -: schematische Darstellung einer Temperaturregelung.

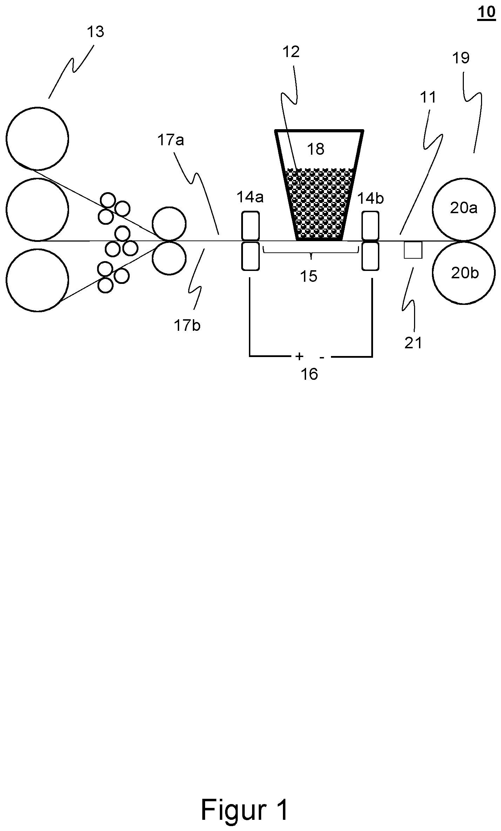

Figur 1 zeigt schematisch eine erste Ausführungsform, bei der der Imprägniervorrichtung 10 sowohl ein elektrisch leitfähiges, bandförmigen Fasermaterial 11 als auch ein Kunststoff 12 in Form eines Granulates zugeführt wird. Das Fasermaterial 11 wird dabei auf einzelnen Materialspulen 13 bereitgestellt, wobei die Materialspulen 13 jeweils ein bandförmiges Fasermaterial der Imprägniervorrichtung 10 zuführen. Im Ausführungsbeispiel der Figur 1 ist dies schematisch durch drei Materialspulen 13 gezeigt. Vor dem Bestromen können die bandförmigen Fasermaterialen mittels einer Spreizvorrichtung (nicht dargestellt) aufgespreizt werden.

Die Imprägniervorrichtung 10 weist des Weiteren eine erste Elektrode 14a und eine zweite Elektrode 14b auf, zwischen denen ein Bestromungsabschnitt 15 in dem Fasermaterial 11 gebildet wird. Die Elektroden 14a und 14b sind dabei mit einer elektrischen Energie- bzw. Spannungsquelle 16 verbunden, sodass an den Elektroden 14a und/oder 14b eine elektrische Spannung derart angelegt werden kann, das im Bestromungsabschnitt 15 ein Stromfluss bewirkt wird.

Die Elektroden 14a und 14b kontaktieren dabei das Fasermaterial 11 an wenigstens einer der Bandseiten des bandförmigen Fasermaterials 11 derart, dass durch das Anlegen einer elektrischen Spannung mittels der elektrischen Energiequelle 16 ein Stromfluss zwischen den beiden Elektroden 14a und 14b im Bestromungsabschnitt 15 realisiert werden kann.

Im Ausführungsbeispiel der Figur 1 sind die Elektroden 14a und 14b so ausgebildet, dass sie sowohl die erste Bandseite 17a als auch die zweite gegenüberliegende Bandseite 17b entsprechend kontaktieren, wobei das Fasermaterial 11 zwischen den beiden Elektrodenelementen der jeweiligen Elektrode 14a und 14b hindurchgeführt wird. Die Elektroden können dabei in Form von Rollen oder Walzen ausgebildet sein.

Denkbar ist aber auch, dass die Elektroden in Form von Kontaktbürsten oder einem Gleitschuh ausgebildet sind.

Im Bestromungsabschnitt 15 zwischen den beiden Elektroden 14a und 14b wird des Weiteren mittels der Imprägniervorrichtung 10 das zugeführte Kunststoffmaterial 12 mit dem bestromten Fasermaterial 11 in Kontakt gebracht, wobei das Kunststoffmaterial 12 in den Materialbehälter 18 als Granulat im festen Aggregatzustand vorliegt. Durch das in Kontakt bringen des Granulates mit dem bestromten Fasermaterial 11 im Bestromungsabschnitt 15 wird das granulatartige Kunststoffmaterial 12 so erwärmt, dass die Temperatur über die Schmelztemperatur des Kunststoffmaterials 12 steigt und das Kunststoffmaterial demzufolge aufschmilzt. Durch das Aufschmelzen des Kunststoffmaterials 12 direkt im Kontakt mit dem Fasermaterial 11 wird das Fasermaterial 11 mit dem Kunststoffmaterial 12 imprägniert, ohne das die gesamte Imprägniervorrichtung 10 entsprechend temperiert werden muss. Vielmehr wird lediglich ein thermischer Energieeintrag in Form einer elektrischen Widerstandsheizung realisiert, der gezielt nur den Bereich aufheizt, der für das Imprägnieren notwendig ist.

Nach dem Bestromungsabschnitt 15 schließt sich ein Walzwerk 19 an, das zwei Walzkörper 20a und 20b hat, die gegensinnig rotieren. Zwischen den beiden Walzkörpern 20a und 20b wird das imprägnierte Fasermaterial hindurchgeführt, sodass sowohl von der ersten Bandseite 17a als auch von der zweiten Bandseite 17b ein Druck auf das Fasermaterial 11 mit dem imprägnierten Kunststoffmaterial 12 ausgeübt wird. Durch den Druck des Walzwerkes 19 und den beiden Walzkörpern 20a und 20b wird erreicht, dass das Kunststoffmaterial noch weiter in das Fasermaterial hineingedrückt und das Fasermaterial 11 besser imprägniert wird.

Alternativ zu dem Walzwerk 19 oder zusätzlich zu dem Walzwerk 19 kann auch eine Vibrationseinrichtung 21 vorgesehen sein, die eine Vibration bzw. eine Bewegung auf das Fasermaterial 11 mit dem aufgeschmolzenen Kunststoffmaterial 12 erzeugt, um so das Imprägnierergebnis zu verbessern. Die Vibrationseinrichtung 21 kann dabei auch in das Walzwerk 19 bzw. in die Walzkörper 20a und/oder 20b integriert sein, wodurch sowohl eine Vibration erzeugt wird als auch ein Druck auf das Fasermaterial ausgeübt wird.

Dabei ist es denkbar, dass mehr als ein Walzwerk vorgesehen ist, um das Imprägnierergebnis zu verbessern. Denkbar ist auch dass mehr als ein Bestromungsabschnitt 15 vorgesehen ist, um das Fasermaterial an verschiedenen Stellen des Prozesses zu temperieren. Denkbar ist auch, dass mehrere Vibrationseinrichtungen 21 vorgesehen sind.

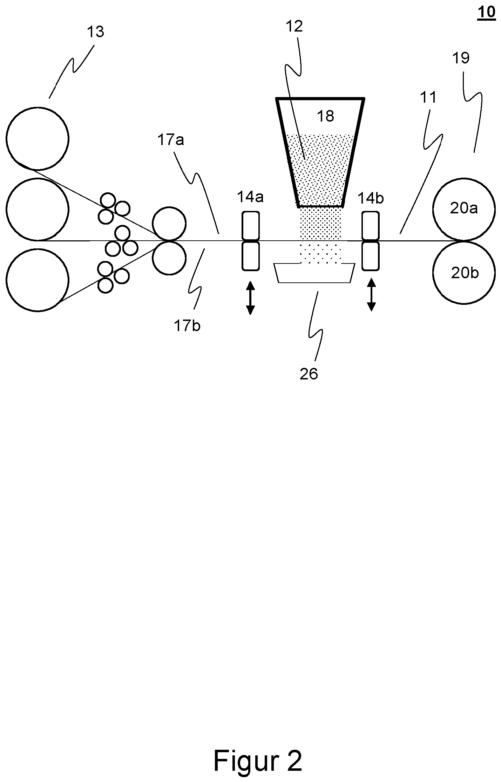

Figur 2 zeigt eine ähnliche Imprägniervorrichtung 10 wie in Figur 1 gezeigt, jedoch mit der Maßgabe, dass das Kunststoffmaterial 12 nicht in Form eines Granulates, sondern in Form eines thermoplastischen Pulvers zugeführt wird. Da das Pulver sehr feinkörnig ist, besteht die Gefahr, dass das Pulver im Bestromungsabschnitt 15 durch das Fasermaterial 11 hindurchrieselt, sodass es mit Hilfe eines Auffangbeckens 26 aufgefangen und für einen späteren Imprägnierprozess verwendet werden kann.

Im Ausführungsbeispiel der Figur 2 ist die Vibrationseinrichtung 21 Bestandteil der Elektroden 14a und 14b, die sodann eine Bewegung bzw. eine Vibration in dem Fasermaterial erzeugen, um so das Imprägnierergebnis zu verbessern.

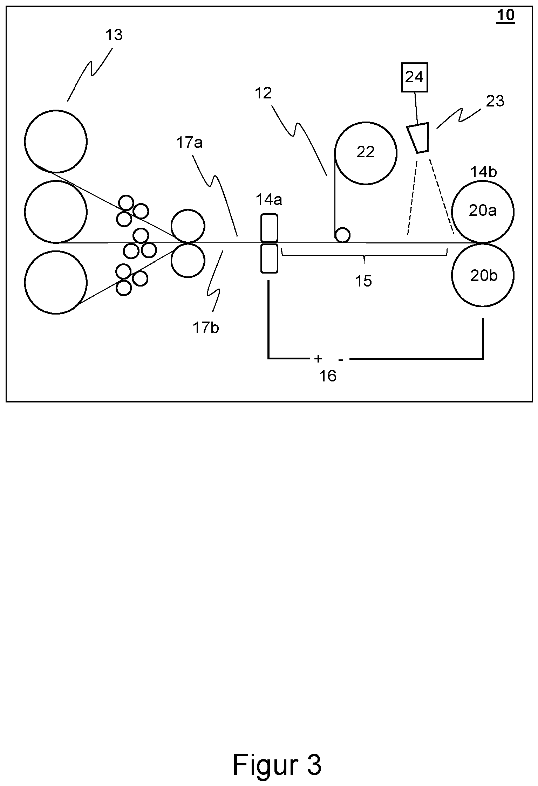

Figur 3 zeigt eine Ausführungsform, bei der das Kunststoffmaterial 12 in Form einer Kunststofffolie bzw. Thermoplastfolie auf einer Materialspule 22 bereitgestellt wird. Die auf der Materialspule 22 bereitgestellte Thermoplastfolie 12 wird sodann in Richtung Fasermaterial 11 geführt und dann innerhalb des Bestromungsabschnittes 15 mit dem Fasermaterial 11 in Kontakt gebracht. Vor der in Kontaktbringung des Fasermaterials 11 mit der Thermoplastfolie 12 ist die erste Elektrode 14a angeordnet, während die zweite Elektrode 14b zur Bildung des Bestromungsabschnittes 15 durch das Walzwerk 19 bzw. einem oder beiden Walzkörper 20a und 20b realisiert wird.

Hierdurch kann erreicht werden, dass zunächst das Fasermaterial mit dem Kunststoffmaterial in Form einer thermoplastischen Folie kontaktiert wird, wobei aufgrund des Betromens im Bestromungsabschnitt 15 die Folie erwärmt und auf Schmelztemperatur gebracht wird, sodass sie dann am Punkt der maximalen Temperatur im Bereich der zweiten Elektrode 14b durch die Walzkörper 20a und 20b miteinander verpresst werden. Hierdurch kann ein sehr gutes Imprägnierergebnis erreicht werden.

In Figur 3 ist des Weiteren eine Thermographiekamera 23 gezeigt, die das Fasermaterial 11 zusammen mit dem Kunststoffmaterial 12 erfasst. Die Thermographiekamera 23 ist dabei mit einer Auswerteeinheit 24 verbunden, die die von der Thermographiekamera 23 aufgenommenen Bilddaten des mit dem Kunststoffmaterial 12 imprägnierten Fasermaterials 11 im Bestromungsabschnitt 15 erhält und auswertet. Die Auswerteeinheit 24 ist nun ausgebildet, die erfassten Bilddaten von der Thermographiekamera 23 so zu analysieren, dass sie die Temperatur jedes einzelnen Fasermaterials 11 innerhalb des Bestromungsabschnittes 15 ermittelt.

Die Auswerteeinheit 24 kann dabei mit der elektrischen Energiequelle 16 derart in Verbindung stehen, dass sie das Anlegen der elektrischen Spannung an die Elektroden 14a und/oder 14b einstellen kann. In Abhängigkeit der erfassten Temperatur jedes einzelnen bandförmigen Fasermaterials 11 wird die elektrische Energiequelle 16 so angesteuert, dass die Temperatur im Bestromungsabschnitt 15 für jedes einzelne bandförmige Fasermaterial 11 entsprechend an eine Soll-Temperatur angeglichen wird.

Hierfür kann beispielsweise die Höhe der elektrischen Spannung angepasst werden. Denkbar ist aber auch, dass der Stromfluss durch gepulstes Anlegen einer elektrischen Spannung entsprechend einer Frequenz periodisch an- und abgeschaltet wird, wobei die Frequenz des An- und Abschaltens variabel ist. Hierdurch kann der thermische Energieeintrag über die Zeit variiert werden, was unmittelbaren Einfluss auf die Temperatur innerhalb des Bestromungsabschnittes 15 des jeweiligen bandförmigen Fasermaterials 11 hat.

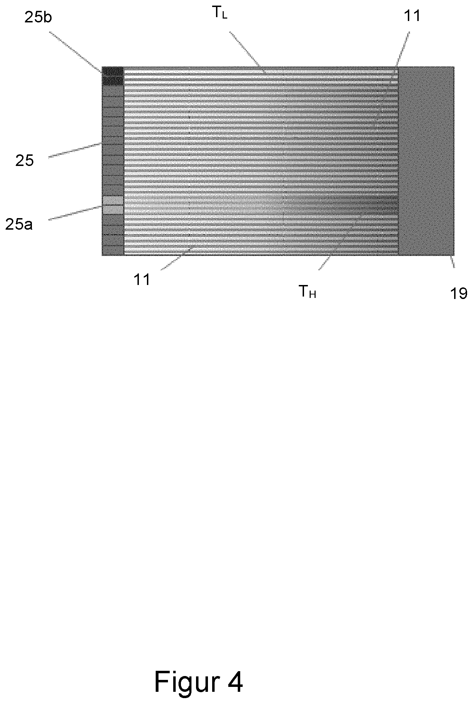

Figur 4 zeigt eine Sicht auf das bandförmige Fasermaterial 11, wie es von der Thermographiekamera 23 aus der Figur 3 aufgenommen wird. Die Verwendung der Thermographiekamera 23 ist dabei nicht auf das Ausführungsbeispiel der Figur 3 beschränkt.

Die Elektrode 14a weist eine Mehrzahl von einzelnen Elektrodenelementen 25 auf, die jeweils separat und unabhängig voneinander angesteuert werden können. Jedes Elektrodenelement 25 steht dabei in Kontakt mit einem einzelnen bandförmigen Fasermaterial 11, sodass jedes einzelne bandförmige Fasermaterial 11 separat und unabhängig von dem anderen bandförmigen Fasermaterialien individuell bestromt werden kann. Die Elektrode 14b wird durch das Walzwerk 19 in Form einer oder beider Walzkörper gebildet.

Die Thermographiekamera 23 erfasst nun kontinuierlich innerhalb des Bestromungsabschnittes 15 die bandförmigen Fasermaterialien 11, wobei mit Hilfe der Auswerteeinheit 24 dann die Temperatur jedes einzelnen bandförmigen Fasermaterials 11 ermittelbar ist. Die für jedes Fasermaterial 11 ermittelte Temperatur (Ist-Temperatur) wird nun mit einer vorgegebenen Soll-Temperatur verglichen, die beispielsweise oberhalb der Schmelztemperatur des verwendeten Kunststoffmaterials liegt.

Wird nun in einem Bereich T_{H} durch die Auswerteeinheit 24 festgestellt, dass die dort vorherrschende Temperatur eines oder mehrerer bandförmiger Fasermaterialien 11 oberhalb der Soll-Temperatur liegt, so werden die diesen bandförmigen Fasermaterialien zugeordneten Elektrodenelementen 25a abgeschaltet oder ebenso weit heruntergeregelt, als das der thermische Energieeintrag geringer wird und somit dauerhaft die Temperatur in diesem Bereich T_{H} absinkt. Wird hingegen in einen Bereich T_{L} festgestellt, dass die Temperatur unterhalb der vorgegebenen Soll-Temperatur liegt, so werden die diesen bandförmigen Fasermaterialien 11 zugeordneten Elektrodenelementen 25b insoweit hochgeregelt, als das der thermische Energieeintrag erhöht wird.

Dieser Regelprozess findet kontinuierlich statt, sodass innerhalb des Bestromungsabschnittes 25 die Temperatur der einzelnen bandförmigen Fasermaterialien 11 im Wesentlichen um die Soll-Temperatur schwankt, wodurch sichergestellt werden kann, dass das mit dem Fasermaterial 11 kontaktierte Kunststoffmaterial aufschmilzt und das Fasermaterial imprägniert.

### Bezugszeichenliste:

- 10 -: Imprägniervorrichtung
- 11 -: elektrisch leitfähiges, bandförmiges Fasermaterial
- 12 -: Kunststoffmaterial
- 13 -: Materialspulen
- 14a, 14b -: Elektroden
- 15 -: Bestromungsabschnitt
- 16 -: elektrische Energiequelle
- 17a -: erste Bandseite
- 17b -: zweite Bandseite
- 18 -: Materialbehälter des Kunststoffmaterials
- 19 -: Walzwerk
- 20a, 20b -: Walzkörper
- 21 -: Vibrationseinrichtung
- 22 -: Materialspule des Kunststoffmaterials
- 23 -: Thermographiekamera
- 24 -: Auswerteeinheit
- 25 -: Elektrodenelemente einer Elektrode
- 25a -: Elektroden mit hoher Temperatur
- 25b -: Elektroden mit geringerer Temperatur
- 26 -: Auffangbecken

## Patentansprüche

1. Verfahren zum Imprägnieren von bandförmigen Fasermaterialien mit einem Kunststoffmaterial (12), wobei das Verfahren die folgenden Schritte umfasst:
- Zuführen mindestens eines elektrisch leitfähigen, bandförmigen Fasermaterials zu einer Imprägniervorrichtung (10), wobei das der Imprägniervorrichtung (10) zugeführte elektrisch leitfähige, bandförmige Fasermaterial jeweils von wenigstens zwei Elektroden (14a, 14b) elektrisch kontaktiert wird,
- Zuführen eines Kunststoffmaterials (12) zu der Imprägniervorrichtung (10), und
- Anlegen einer elektrischen Spannung an mindestens eine der Elektroden (14a, 14b) zum Erzeugen eines Stromflusses in einem durch die Kontaktierung der Elektroden (14a, 14b) gebildeten Bestromungsabschnitt (15) derart, dass das elektrisch leitfähige, bandförmige Fasermaterial aufgrund des Stromflusses und infolge des inneren Widerstandes des elektrisch leitfähigen, bandförmigen Fasermaterials innerhalb des Bestromungsabschnittes (15) erwärmt wird,
- wobei das Kunststoffmaterial (12) derart zugeführt wird, dass es das elektrisch leitfähige, bandförmige Fasermaterial mindestens im Bestromungsabschnitt (15) kontaktiert, und
- wobei das elektrisch leitfähige, bandförmige Fasermaterial durch das Anlegen der elektrischen Spannung im Bestromungsabschnitt (15) derart erwärmt wird, dass das zugeführte Kunststoffmaterial (12) durch Kontakt mit dem Fasermaterial aufgeschmolzen und/oder dass das bereits aufgeschmolzene Kunststoffmaterial (12) auf seiner Schmelztemperatur gehalten wird,
**dadurch gekennzeichnet, dass** das flächige Fasermaterial einer Vibrationseinrichtung (21) der Imprägniervorrichtung (10) zugeführt wird, wobei mittels der Vibrationseinrichtung eine Bewegung oder Vibration des bandförmigen Fasermaterials erzeugt wird.

2. Verfahren nach Anspruch 1, **dadurch gekennzeichnet, dass** eine Mehrzahl von elektrisch leitfähigen, bandförmigen Fasermaterialien der Imprägniervorrichtung (10) parallel zugeführt werden, wobei jedes elektrisch leitfähige, bandförmige Fasermaterial mit wenigstens zwei Elektroden (14a, 14b) kontaktiert und mittels eines Stromflusses im jeweiligen Bestromungsabschnitt (15) erwärmt wird.

3. Verfahren nach Anspruch 1 oder 2, **dadurch gekennzeichnet, dass** das Kunststoffmaterial (12) der Imprägniervorrichtung (10) in Form eines Kunststoffpulvers, eines Kunststoffgranulates, eines Kunststoffvlieses, eines Kunststofffestkörpers, einer Kunststofffolie oder in Form von Kunststofffasern zugeführt und mit dem wenigstens einen zugeführten, elektrisch leitfähigen, bandförmigen Fasermaterial in Kontakt gebracht wird und/oder dass das Kunststoffmaterial (12) der Imprägniervorrichtung (10) in einem festen Zustand oder in einem aufgeschmolzenen Zustand zugeführt und mit dem wenigstens einen zugeführten, elektrisch leitfähigen, bandförmigen Fasermaterial in Kontakt gebracht wird.

4. Verfahren nach einem der vorhergehenden Ansprüche, **dadurch gekennzeichnet, dass** das mit dem aufgeschmolzenen Kunststoffmaterial (12) kontaktierte Fasermaterial einem Walzwerk (19) der Imprägniervorrichtung (10) zugeführt wird, wobei mittels des Walzwerkes (19) zumindest teilweise ein Druck auf das mit dem Kunststoffmaterial kontaktierte bandförmige Fasermaterial aufgebracht wird.

5. Verfahren nach Anspruch 4, **dadurch gekennzeichnet, dass** das Walzwerk (19) temperiert wird.

6. Verfahren nach Anspruch 4 oder 5, **dadurch gekennzeichnet, dass** durch das Walzwerk (19) wenigstens eine der Elektroden (14a, 14b) gebildet wird.

7. Verfahren nach einem der vorhergehenden Ansprüche, **dadurch gekennzeichnet, dass** mittels einer Temperaturmesseinrichtung der Imprägniervorrichtung (10) die Temperatur des wenigstens einen bandförmigen Fasermaterials, vorzugsweise innerhalb des Bestromungsabschnittes (15), ermittelt wird.

8. Verfahren nach Anspruch 7, **dadurch gekennzeichnet, dass** mittels einer Steuereinrichtung der Imprägniervorrichtung (10) das Anlegen der elektrischen Spannung in Abhängigkeit von der ermittelten Temperatur gesteuert wird.

9. Verfahren nach einem der vorhergehenden Ansprüche, **dadurch gekennzeichnet, dass** das zugeführte Kunststoffmaterial (12) ein thermoplastischer Kunststoff ist, einen solchen thermoplastischer Kunststoff aufweist oder aus einem solchen besteht.

10. Verfahren zum Ablegen von bandförmigen Fasermaterialien auf einem Formwerkzeug mittels einer Faserlegeanlage, **dadurch gekennzeichnet, dass** das bandförmige Fasermaterial elektrisch leitfähig ist und gemäß dem Verfahren nach einem der Ansprüche 1 bis 9 während des Ablegens mit einem Kunststoffmaterial (12) imprägniert wird.

11. Verfahren zum Extrudieren eines Kunststoffmaterials (12) mittels einer 3D-Druckanlage, **dadurch gekennzeichnet, dass** ein elektrisch leitfähiges, bandförmiges Fasermaterial (11) bereitgestellt wird, dass gemäß dem Verfahren nach einem der Ansprüche 1 bis 9 während des Extrudierens mit dem Kunststoffmaterial (12) imprägniert wird, wobei das Kunststoffmaterial (12) zusammen mit dem Fasermaterial extrudiert wird.

12. Imprägniervorrichtung (10) zum Imprägnieren von bandförmigen Fasermaterialien mit einem Kunststoffmaterial (12), wobei
- der Imprägniervorrichtung (10) mindestens ein elektrisch leitfähiges, bandförmiges Fasermaterials zuführbar ist,
- die Imprägniervorrichtung (10) mindestens zwei Elektroden (14a, 14b) hat, die das der Imprägniervorrichtung (10) zugeführte elektrisch leitfähige, bandförmige Fasermaterial jeweils elektrisch kontaktieren,
- der Imprägniervorrichtung (10) ein Kunststoffmaterial (12) zuführbar ist,
- die Imprägniervorrichtung (10) eingerichtet ist, eine elektrischen Spannung an mindestens eine der Elektroden (14a, 14b) zum Erzeugen eines Stromflusses in einem durch die Kontaktierung der Elektroden (14a, 14b) gebildeten Bestromungsabschnitt (15) derart anzulegen, dass das elektrisch leitfähige, bandförmige Fasermaterial aufgrund des Stromflusses und infolge des inneren Widerstandes des elektrisch leitfähigen, bandförmigen Fasermaterials innerhalb des Bestromungsabschnittes (15) erwärmt wird,
- die Imprägniervorrichtung eingerichtet ist, das Kunststoffmaterial (12) derart zuzuführen, dass es das elektrisch leitfähige, bandförmige Fasermaterial mindestens im Bestromungsabschnitt (15) kontaktiert,
- die Imprägniervorrichtung eingerichtet ist, das elektrisch leitfähige, bandförmige Fasermaterial durch das Anlegen der elektrischen Spannung im Bestromungsabschnitt (15) derart zu erwärmen, dass das zugeführte Kunststoffmaterial (12) durch Kontakt mit dem Fasermaterial aufgeschmolzen und/oder dass das bereits aufgeschmolzene Kunststoffmaterial (12) auf seiner Schmelztemperatur gehalten wird,
- die Imprägniervorrichtung eine Vibrationseinrichtung hat, die eingerichtet ist, eine Bewegung oder Vibration des der Vibrationseinrichtung zugeführten bandförmigen Fasermaterials zu erzeugen, und
- die Imprägniervorrichtung (10) zur Durchführung des Verfahrens nach einem der Ansprüche 1 bis 9 ausgebildet ist.

13. Faserlegeanlage zum Ablegen von bandförmigen Fasermaterialien auf einem Formwerkzeug, **dadurch gekennzeichnet, dass** die Faserlegeanlage eine Imprägniervorrichtung (10) nach Anspruch 12 aufweist.

14. Faserlegeanlage nach Anspruch 13, **dadurch gekennzeichnet, dass** die Faserlegeanlage einen Faserlegekopf hat, dem sowohl das bandförmige Fasermaterial als auch das Kunststoffmaterial (12) zugeführt werden, wobei die Imprägniervorrichtung (10) in oder an dem Faserlegekopf vorgesehen ist.

15. 3D-Druckanlage zum Extrudieren eines Kunststoffmaterials (12), **dadurch gekennzeichnet, dass** die 3D-Druckanlage zum Extrudieren einer Materialmischung aus Kunststoffmaterial (12) und bandförmigen Fasermaterial eingerichtet ist, wobei die 3D-Druckanlage eine Imprägniervorrichtung (10) nach Anspruch 12 aufweist.

16. 3D-Druckanlage nach Anspruch 15, **dadurch gekennzeichnet, dass** die 3D-Druckanlage einen 3D-Druckkopf hat, dem sowohl das bandförmige Fasermaterial als auch das Kunststoffmaterial (12) zugeführt werden, wobei die Imprägniervorrichtung (10) in oder an dem 3D-Druckkopf vorgesehen ist.

## Claims

1. Method of impregnating fibre materials in strip form with a polymer material (12), wherein the method comprises the following steps:
- feeding at least one electrically conductive fibre material in strip form to an impregnation device (10), wherein the electrically conductive fibre material in strip form fed to the impregnation device (10) is electrically contacted in each case by at least two electrodes (14a, 14b),
- feeding a polymer material (12) to the impregnation device (10), and
- applying an electrical voltage to at least one of the electrodes (14a, 14b) to generate a flow of current in an electrified section (15) formed by the contacting of the electrodes (14a, 14b) in such a way that the electrically conductive fibre material in strip form is heated within the electrified section (15) on account of the flow of current and as a result of the internal resistance of the electrically conductive fibre material in strip form,
- wherein the polymer material (12) is fed in such that it contacts the electrically conductive fibre material in strip form at least in the electrified section (15), and
- wherein the electrically conductive fibre material in strip form is heated by the application of the electrical voltage in the electrified section (15) in such a way that the polymer material (12) fed in is melted by contact with the fibre material and/or that the already melted polymer material (12) is kept at its melting temperature,
**characterized in that** the two-dimensional fibre material is fed to a vibration unit (21) of the impregnation device (10), wherein the vibration unit generates a movement or vibration of the fibre material in strip form.

2. Method according to Claim 1, **characterized in that** a multitude of electrically conductive fibre materials in strip form are fed in parallel to the impregnation device (10), with each electrically conductive fibre material in strip form contacting at least two electrodes (14a, 14b) and being heated by means of a flow of current in the respective electrified section (15) .

3. Method according to Claim 1 or 2, **characterized in that** the polymer material (12) is fed to the impregnation device (10) in the form of a polymer powder, of polymer pellets, of a polymer web, of a solid-state polymer body, of a polymer film, or in the form of polymer fibres, and is contacted with the at least one electrically conductive fibre material in strip form that has been fed in, and/or **in that** the polymer material (12) is fed to the impregnation device (10) in a solid state or in a molten state and is contacted with the at least one electrically conductive fibre material in strip form that has been fed in.

4. Method according to any of the preceding claims, **characterized in that** the fibre material that has been contacted with the molten polymer material (12) is fed to a roller system (19) of the impregnation device (10), wherein the roller system (19) at least partly applies a pressure to the fibre material in strip form that has been contacted with the polymer material.

5. Method according to Claim 4, **characterized in that** the temperature of the roller system (19) is controlled.

6. Method according to Claim 4 or 5, **characterized in that** the roller system (19) forms at least one of the electrodes (14a, 14b).

7. Method according to any of the preceding claims, **characterized in that** a temperature measurement unit of the impregnation device (10) ascertains the temperature of the at least one fibre material in strip form, preferably within the electrified section (15) .

8. Method according to Claim 7, **characterized in that** a control unit of the impregnation device (10) controls the application of the electrical voltage depending on the temperature ascertained.

9. Method according to any of the preceding claims, **characterized in that** the polymer material (12) fed in is a thermoplastic polymer, or includes or consists of such a thermoplastic polymer.

10. Method of laying fibre materials in strip form on a mould by means of a fibre laying system, **characterized in that** the fibre material in strip form is electrically conductive and is impregnated with a polymer material (12) by the method according to any of Claims 1 to 9 during the laying.

11. Method of extruding a polymer material (12) by means of a 3D printing system, **characterized in that** an electrically conductive fibre material (11) in strip form is provided, which is impregnated with the polymer material (12) by the method according to any of Claims 1 to 9 during the extrusion, wherein the polymer material (12) is extruded together with the fibre material.

12. Impregnation device (10) for impregnating fibre materials in strip form with a polymer material (12), wherein
- the impregnation device (10) can be fed with at least one electrically conductive fibre material in strip form,
- the impregnation device (10) has at least two electrodes (14a, 14b) that each make electrical contact with the electrically conductive fibre material in strip form fed to the impregnation device (10),
- the impregnation device (10) can be fed with a polymer material (12),
- the impregnation device (10) is set up to apply an electrical voltage to at least one of the electrodes (14a, 14b) to generate a flow of current in an electrified section (15) formed by the contacting of the electrodes (14a, 14b) in such a way that the electrically conductive fibre material in strip form is heated within the electrified section (15) on account of the flow of current and as a result of the internal resistance of the electrically conductive fibre material in strip form,
- the impregnation device is set up to feed in the polymer material (12) such that it contacts the electrically conductive fibre material in strip form at least in the electrified section (15),
- the impregnation device is set up to heat the electrically conductive fibre material in strip form by the application of the electrical voltage in the electrified section (15) in such a way that the polymer material (12) fed in is melted by contact with the fibre material and/or that the already melted polymer material (12) is kept at its melting temperature,
- the impregnation device has a vibration unit set up to generate a movement or vibration of the fibre material in strip form fed to the vibration unit, and
- the impregnation device (10) is designed to implement the method according to any of Claims 1 to 9.

13. Fibre laying system for laying fibre materials in strip form on a mould, **characterized in that** the fibre laying system includes an impregnation device (10) according to Claim 12.

14. Fibre laying system according to Claim 13, **characterized in that** the fibre laying system has a fibre laying head which is fed both with the fibre material in strip form and with the polymer material (12), wherein the impregnation device (10) is provided in or on the fibre laying head.

15. 3D printing system for extrusion of a polymer material (12), **characterized in that** the 3D printing system is set up to extrude a material mixture of polymer material (12) and fibre material in strip form, wherein the 3D printing system includes an impregnation device (10) according to Claim 12.

16. 3D printing system according to Claim 15, **characterized in that** the 3D printing system has a 3D printhead which is fed both with the fibre material in strip form and with the polymer material (12), wherein the impregnation device (10) is disposed in or on the 3D printhead.

## Revendications

1. Procédé d'imprégnation de matériaux fibreux en forme de bande avec une matière plastique (12), le procédé comprenant les étapes suivantes consistant à :
- amener au moins un matériau fibreux en forme de bande électriquement conducteur à un dispositif d'imprégnation (10), le matériau fibreux en forme de bande électriquement conducteur amené au dispositif d'imprégnation (10) étant mis en contact électrique avec au moins deux électrodes respectives (14a, 14b),
- amener une matière plastique (12) au dispositif d'imprégnation (10), et
- appliquer une tension électrique à l'une au moins des électrodes (14a, 14b) pour générer un flux de courant dans une section d'alimentation en courant (15) formée par la mise en contact des électrodes (14a, 14b), de manière à chauffer le matériau fibreux en forme de bande électriquement conducteur à l'intérieur de la section d'alimentation en courant (15) en raison du flux de courant et en raison de la résistance interne du matériau fibreux en forme de bande électriquement conducteur,
dans lequel
- la matière plastique (12) est amenée de manière à entrer en contact avec le matériau fibreux en forme de bande électriquement conducteur au moins dans la section d'alimentation en courant (15), et
- le matériau fibreux en forme de bande électriquement conducteur est chauffé dans la section d'alimentation en courant (15) par l'application de la tension électrique de telle sorte que la matière plastique (12) amenée est fondue par contact avec le matériau fibreux et/ou que la matière plastique (12) déjà fondue est maintenue à sa température de fusion,
**caractérisé en ce que** le matériau fibreux plat est amené à un dispositif de vibration (21) du dispositif d'imprégnation (10), un mouvement ou une vibration du matériau fibreux en forme de bande étant généré(e) au moyen du dispositif de vibration.

2. Procédé selon la revendication 1,
**caractérisé en ce qu'**une pluralité de matériaux fibreux en forme de bande électriquement conducteurs sont amenés en parallèle au dispositif d'imprégnation (10), chaque matériau fibreux en forme de bande électriquement conducteur étant mis en contact avec au moins deux électrodes (14a, 14b) et étant chauffé dans la section d'alimentation en courant respective (15) au moyen d'un flux de courant.

3. Procédé selon la revendication 1 ou 2,
**caractérisé en ce que** la matière plastique (12) est amenée au dispositif d'imprégnation (10) sous la forme d'une poudre de matière plastique, d'un granulé de matière plastique, d'un non-tissé de matière plastique, d'un corps solide de matière plastique, d'un film de matière plastique ou sous la forme de fibres de matière plastique, et est mise en contact avec ledit au moins un matériau fibreux en forme de bande électriquement conducteur amené, et/ou
**en ce que** la matière plastique (12) est amenée au dispositif d'imprégnation (10) dans un état solide ou dans un état fondu et est mise en contact avec ledit au moins un matériau fibreux en forme de bande électriquement conducteur amené.

4. Procédé selon l'une des revendications précédentes,
**caractérisé en ce que** le matériau fibreux mis en contact avec la matière plastique (12) fondue est amené à un laminoir (19) du dispositif d'imprégnation (10), une pression étant appliquée au moins partiellement au moyen du laminoir (19) sur le matériau fibreux en forme de bande mis en contact avec la matière plastique.

5. Procédé selon la revendication 4,
**caractérisé en ce que** le laminoir (19) est tempéré.

6. Procédé selon la revendication 4 ou 5,
**caractérisé en ce que** l'une au moins des électrodes (14a, 14b) est formée par le laminoir (19).

7. Procédé selon l'une des revendications précédentes,
**caractérisé en ce que** la température dudit au moins un matériau fibreux en forme de bande est déterminée au moyen d'un dispositif de mesure de température du dispositif d'imprégnation (10), de préférence à l'intérieur de la section d'alimentation en courant (15).

8. Procédé selon la revendication 7,
**caractérisé en ce que** l'application de la tension électrique est commandée en fonction de la température déterminée au moyen d'un dispositif de commande du dispositif d'imprégnation (10).

9. Procédé selon l'une des revendications précédentes,
**caractérisé en ce que** la matière plastique (12) amenée est une matière thermoplastique, présente une telle matière thermoplastique ou est constituée d'une telle matière thermoplastique.

10. Procédé de pose de matériaux fibreux en forme de bande sur un outil de moulage au moyen d'une installation de pose de fibres,
**caractérisé en ce que** le matériau fibreux en forme de bande est électriquement conducteur et est imprégné avec une matière plastique (12) pendant la pose, conformément au procédé selon l'une des revendications 1 à 9.

11. Procédé d'extrusion d'une matière plastique (12) au moyen d'une installation d'impression 3D,
**caractérisé en ce que** l'on fournit un matériau fibreux (11) en forme de bande électriquement conducteur qui est imprégné avec la matière plastique (12) pendant l'extrusion, conformément au procédé selon l'une des revendications 1 à 9, la matière plastique (12) étant extrudée conjointement avec le matériau fibreux.

12. Dispositif d'imprégnation (10) pour imprégner des matériaux fibreux en forme de bande avec une matière plastique (12), dans lequel
- le dispositif d'imprégnation (10) peut être alimenté en au moins un matériau fibreux en forme de bande électriquement conducteur,
- le dispositif d'imprégnation (10) comprend au moins deux électrodes (14a, 14b) qui entrent en contact électrique avec le matériau fibreux en forme de bande électriquement conducteur amené au dispositif d'imprégnation (10),
- le dispositif d'imprégnation (10) peut être alimenté en une matière plastique (12),
- le dispositif d'imprégnation (10) est conçu pour appliquer une tension électrique à l'une au moins des électrodes (14a, 14b) pour générer un flux de courant dans une section d'alimentation en courant (15) formée par la mise en contact des électrodes (14a, 14b), de manière à chauffer le matériau fibreux en forme de bande électriquement conducteur à l'intérieur de la section d'alimentation en courant (15) en raison du flux de courant et en raison de la résistance interne du matériau fibreux en forme de bande électriquement conducteur,
- le dispositif d'imprégnation est conçu pour amener la matière plastique (12) de manière à entrer en contact avec le matériau fibreux en forme de bande électriquement conducteur au moins dans la section d'alimentation en courant (15),
- le dispositif d'imprégnation est conçu pour chauffer le matériau fibreux en forme de bande électriquement conducteur dans la section d'alimentation en courant (15) par l'application de la tension électrique, de telle sorte que la matière plastique (12) amenée est fondue par contact avec le matériau fibreux et/ou que la matière plastique (12) déjà fondue est maintenue à sa température de fusion,
- le dispositif d'imprégnation comprend un dispositif de vibration conçu pour générer un mouvement ou une vibration du matériau fibreux en forme de bande amené au dispositif de vibration, et
- le dispositif d'imprégnation (10) est réalisé pour mettre en oeuvre le procédé selon l'une des revendications 1 à 9.

13. Installation de pose de fibres pour poser des matériaux fibreux en forme de bande sur un outil de moulage,
**caractérisée en ce que** l'installation de pose de fibres présente un dispositif d'imprégnation (10) selon la revendication 12.

14. Installation de pose de fibres selon la revendication 13,
**caractérisée en ce que** l'installation de pose de fibres comprend une tête de pose de fibres à laquelle sont amenés aussi bien le matériau fibreux en forme de bande que la matière plastique (12), le dispositif d'imprégnation (10) étant prévu dans ou sur la tête de pose de fibres.

15. Installation d'impression 3D pour l'extrusion d'une matière plastique (12),
**caractérisée en ce que** l'installation d'impression 3D est conçue pour extruder un mélange de matière plastique (12) et de matériau fibreux en forme de bande, l'installation d'impression 3D présentant un dispositif d'imprégnation (10) selon la revendication 12.

16. Installation d'impression 3D selon la revendication 15,
**caractérisée en ce que** l'installation d'impression 3D comprend une tête d'impression 3D à laquelle sont amenés aussi bien le matériau fibreux en forme de bande que la matière plastique (12), le dispositif d'imprégnation (10) étant prévu dans ou sur la tête d'impression 3D.
